# EUROPÄISCHE PATENTSCHRIFT

(11) **EP 1 658 921 B1**
(45) Veröffentlichungstag und Bekanntmachung des Hinweises auf die Patenterteilung: **18.01.2017**
(21) Anmeldenummer: 04027273.4
(22) Anmeldetag: 17.11.2004
(51) Int. Cl.: B23K 26/142, B23K 26/16

(54) **Laserschweissvorrichtung für Hochleistungslaser mit hoher Strahlqualität und Fokussieroptiken mit langer Brennweite**
Laser welding apparatus for a high-power laser with high beam quality and long focal-length focussing optics
Appareil de soudage laser pour un laser à haute puissance avec faisceau de haute qualité et optique focale de longue distance focale

(43) Veröffentlichungstag der Anmeldung: 24.05.2006
(73) Patentinhaber: TRUMPF Laser GmbH, 78713 Schramberg (DE)
(72) Erfinder: Schäfer, Peter, 78713 Schramberg (DE); Huonker, Martin, 78658 Zimmern (DE); Faisst, Frank, 78713 Schramberg (DE); Petersen, Richard, 78667 Villingendorf (DE)
(74) Vertreter: Kohler Schmid Möbus Patentanwälte

(56) Entgegenhaltungen:
- EP-A- 1 206 998
- WO-A-95/03911
- DE-A1- 3 822 097
- DE-A1- 3 923 829
- DE-A1- 4 435 531
- GB-A- 2 390 319
- US-A- 4 723 063
- US-A- 4 992 643
- US-A1- 2002 040 894
- JONES L ET AL: "Advanced cutting, welding and inspection methods for vacuum vessel assembly and maintenance" FUSION ENGINEERING AND DESIGN, ELSEVIER SCIENCE PUBLISHERS, AMSTERDAM, NL, Bd. 51-52, November 2000 (2000-11), Seiten 985-991, XP004315267 ISSN: 0920-3796

## Beschreibung

Die vorliegende Erfindung betrifft eine Vorrichtung zum Laserschweißen ohne Prozessgas.

Bei Hochleistungslasern hoher Strahlqualität (CO₂-, Scheiben-, Stab- und Faserlasern) werden die zum Tiefschweißen erforderlichen Leistungsdichten auch bei großen Brennweiten (>200 mm) erreicht, so dass Schweißprozesse mit großem Arbeitsabstand ("Remote Welding") durchgeführt werden können. Bei solchen Schweißprozessen, die ohne ein Prozessgas (Arbeitsgas) direkt an der Bearbeitungsstelle durchgeführt wurden, wurde der folgende Effekt beobachtet: Die Schweißergebnisse zeigen eine sehr große Schwankung der Einschweißtiefe bzw. der Wurzelausbildung beim Durchschweißen. Diese Schwankung reicht von Nicht-Durchschweißung mit nur gering ausgebildeten Anlassfarben auf der Blechunterseite bis zur satten Durchschweißung. Diese Schweißnahtschwankungen sind beim Schweißen mit Festkörperlasern erst mit dem Einsatz der Scheibenlaser bei Verwendung von Fokussieroptiken mit langer Brennweite beobachtet worden. Die Schweißnahtschwankungen treten insbesondere bei F-Zahlen (F-Zahl = Brennweite der Fokussierlinse / Strahldurchmesser auf der Fokussierlinse) größer als 8 auf.

Aus der GB 2 390 319 A ist eine Vorrichtung zum Laserschweißen mit Prozessgas bekannt. Diese bekannte Laserschweißvorrichtung umfasst einen von einem Festkörperlaser erzeugten Laserstrahl, eine den Laserstrahl auf die Bearbeitungszone eines Werkstücks fokussierende Optik, deren Brennweite 200mm beträgt, und eine Crossjet-Düse, die außerhalb eines werkstücknahen Bereichs (nämlich nahe an der Optik) angeordnet ist, welcher sich von der Bearbeitungszone bis maximal 150mm vor die Bearbeitungszone erstreckt, und die einen auf den fokussierten Laserstrahl gerichteten Gasstrom erzeugt, welcher den Laserstrahl durchdringt. Die Crossjet-Düse erzeugt unterhalb der Optik einen so starken Luftstrom (Crossjet) quer zum Laserstrahl, dass die Optik bzw. ein zugehöriges Schutzelement vor Schweißspritzern geschützt ist. In geringem Abstand vor der Bearbeitungszone ist eine erste Düse vorgesehen, die einen Argon-Prozessgasstrom auf die Bearbeitungszone richtet, um dort die Ausbildung eines Plasmas zu unterdrücken. Ebenfalls in geringem Abstand vor der Bearbeitungszone ist eine zweite Düse vorgesehen, die einen Argon-Prozessgasstrom als Oxidationsschutzgas auf das Werkstück richtet. Schließlich ist in 2mm Abstand zur Werkstückoberfläche noch eine Absaugdüse vorgesehen.

Demgegenüber ist es die Aufgabe der vorliegenden Erfindung, bei einer Vorrichtung zum Laserschweißen ohne Prozessgas die oben beschriebenen Schweißnahtschwankungen verhindert werden können.

Diese Aufgabe wird erfindungsgemäß durch eine Laserschweißvorrichtung mit den Merkmalen von Anspruch 1 oder von Anspruch 7 gelöst.

Erfindungsgemäß ist erkannt worden, dass der beim Laserschweißen aus der Bearbeitungszone austretende Schweißrauch, getrieben von ebenfalls austretendem Metalldampf, in Richtung des einfallenden Laserstrahls bewegt wird und die Umbebungsluft erwärmt. Der einfallende Laserstrahl wird durch dieses Gemisch aus Schweißgasen und warmer Umgebungsluft in seiner Intensität und in seiner Strahlgeometrie nachteilig verändert. Der Einfluss von Schweißrauch bzw. Metalldampf auf den Laserstrahl hängt von der Leistungsdichte am Bauteil, dem Fokussierwinkel des Laserstrahls und der Brennweite der Fokussierlinse ab. Beim Laserschweißen mit Fokussierlinsen geringerer Brennweite ist der Strahlweg des Laserstrahls bis zum Werkstück nicht so lang, als dass beim konventionellen Laserschweißen mit geringem Arbeitsabstand der Schweißdüse zum Werkstück eine merkliche und den Prozess störende Beeinflussung der Strahleigenschaften auftreten kann. Außerdem sind bei der bisher deutlich geringeren Strahlqualität der Bearbeitungslaser der Strahldurchmesser auf der Fokussierlinse und der Fokussierwinkel des Strahls größer, so dass der Strahl oberhalb des Werkstücks eine kürzere Zone mit hoher Leistungsdichte aufweist.

Der Einfluss des Schweißrauchs und Metalldampfs ist abhängig von der Erzeugungsrate, der Schweißgeschwindigkeit, dem Grad der Durchschweißung dem Schmelzbadvolumen, dem zu schweißenden Material und der Dampfkonzentration im gesamten Bearbeitungsraum. Um beim Schweißen mit Fokussieroptiken langer Brennweite gleichmäßige Schweißnähte mit gleichmäßiger Wurzelausbildung zu erhalten, müssen die durch den Schweißrauch und Metalldampf hervorgerufenen Strahlveränderungen verhindert werden.

Erfindungsgemäß ist der Bereich des fokussierten Laserstrahls unterhalb der Optik durch einen oder mehrere Gasströme (vorzugsweise Luft) oder durch eine Absaugung weitestgehend frei von dem Gemisch aus Schweißgasen und warmer Umgebungsluft gehalten. Mit einer geeigneten Gasdüse wird ein Gasstrom mit relativ geringem Volumenstrom in Richtung des fokussierten Laserstrahls auf die Bearbeitungs- bzw. Fügezone gerichtet, der den Laserstrahlweg durchdringt. Der Gasstrom erfolgt also von oben auf das Werkstück. Die Gasdüse kann in Form einer Koaxialdüse oder auch mehrerer Einzeldüsen um den Laserstrahl herum angeordnet sein. Aufgabe des Gasstroms ist es dabei nicht, eine Schutzgaswirkung auf dem Bauteil gegen Oxidation zu erreichen, sondern den Strahlungsraum des einfallenden Laserlichtes von Schweißgasen und erwärmter Luft möglichst freizuhalten.

Beim konventionellen Schweißen mit CO₂-Lasern mit hohen Leistungdichten können ebenfalls Schweißnahtschwankungen auftreten. Dieser Effekt wird auf die Abschirmung der Laserstrahlung durch das laserinduzierte Metalldampfplasma ("Laserplasma") im Dampfkanal der Schweißstelle zurückgeführt. Ein Prozessgas (Arbeitsgas) direkt an der Bearbeitungszone ist erforderlich, um den abschirmenden Efffekt des "Laserplasmas" zu beseitigen. Auch beim Remote Welding mit CO₂-Lasern ist bei hohen Leistungsdichten Prozessgas an der Schweißstelle (d.h. direkt am Bauteil) notwendig, das meist über die Bauteilaufspannung zugeführt wird. Das Prozessgas verhindert zusätzlich das Aufsteigen von Schweißrauch, so dass sich das oben beschriebene Problem nur dann stellen kann, wenn - bei niedriger Leistungsdichte - ohne Prozessgas geschweißt wird. Für die Wellenlänge von Festkörperlasern, z.B. eines Nd:YAG-Lasers, ist das Metalldampfplasma durchsichtig, so dass beim konventionellen Schweißen mit Nd:YAG-Lasern kein Prozessgas notwendig ist.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1 a und 1 b: die erfindungsgemäße Laserschweißvorrichtung mit einer an einer Fokussieroptik (Fig. 1 a) bzw. an einer Scanneroptik (Fig. 1 b) vorgesehenen Begrenzungseinrichtung;
- Fign. 2a und 2b: die erfindungsgemäße Laserschweißvorrichtung mit einer an einer Cross-Jet-Düse vorgesehenen Begrenzungseinrichtung sowie mit einer Fokussieroptik (Fig. 2a) bzw. einer Scanneroptik (Fig. 2b); und
- Fig. 3: die erfindungsgemäße Laserschweißvorrichtung mit einer als Absaugung ausgebildeten Begrenzungseinrichtung.

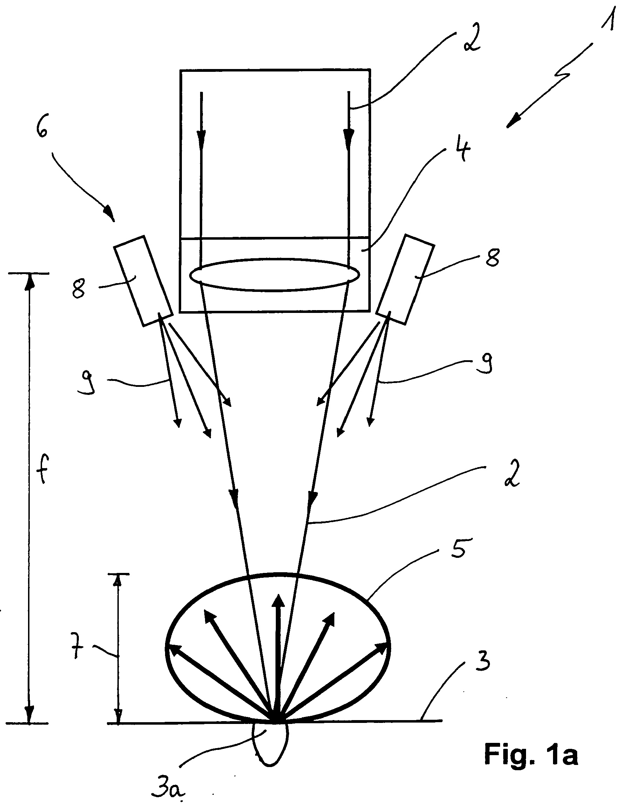

Die in **Fig. 1a** gezeigte Laserschweißvorrichtung **1** weist einen von einem Festkörperlaser (nicht gezeigt) erzeugten Laserstrahl **2** und eine den Laserstrahl 2 auf die zu schweißende Bearbeitungszone **3a** eines Werkstück **3** fokussierenden Fokussieroptik **4** auf, deren Brennweite **f** mindestens 200mm beträgt.

Die beim Laserschweißen aus der Bearbeitungszone 3a austretenden Schweißgase, also Schweißrauch und Metalldämpfe, zusammen mit der dabei erwärmten Umgebungsluft bilden ein Gemisch **5**, das von der Bearbeitungszone 3a in Richtung Optik 4 aufsteigt und den einfallenden Laserstrahl 2 in Intensität und Strahlgeometrie nachteilig bezüglich der Schweißnaht (geringe und ungleichmäßige Einschweißtiefe) verändert. Um die Eindringtiefe des Laserstrahls 2 in das Gemisch 5 zu reduzieren, ist an der Fokussieroptik 4 eine Begrenzungseinrichtung **6** vorgesehen, die das beim Laserschweißen entstehende Gemisch 5 aus Schweißgasen und warmer Umgebungsluft innerhalb des fokussierten Laserstrahls 2 auf einen werkstücknahen Bereich **7** von maximal 100 bis 150mm begrenzt.

Die Begrenzungseinrichtung 6 weist mehrere um den einfallenden Laserstrahl 2 herum angeordnete Gasdüsen **8** auf, die jeweils einen divergenten Gasstrom **9** mit relativ geringem Volumenstrom von oben auf die Bearbeitungszone 3a und den Bereich oberhalb der Bearbeitungszone 3a richten. Das Gas ist bezüglich des Laserstrahls 2 reaktionslos und vorzugsweise Luft. Aufgabe der Gasströme 9 ist es dabei nicht, eine Schutzgaswirkung auf dem Werkstück 3 gegen Oxidation zu erreichen, sondern das Gemisch 5 aus dem werkstückfernen Strahlungsraum des einfallenden Laserstrahls 2 zu verdrängen. Daher ist eine Gasströmung mit geringer Strömungsgeschwindigkeit und geringem Druck (z.B. 0,2 bar) ausreichend, die auch die Schmelze und ein eventuell eingesetztes Schutzgas an der Bearbeitungszone 3a nicht beeinflusst. Ein möglicher Einsatz von Schutzgas hat lediglich die Aufgabe, die Ober- oder Unterraupe der Schweißnaht während des Abkühlens der Schmelze vor Reaktionen mit der Umgebungsluft zu schützen.

In einer nicht gezeigten Variante sind die mehreren Gasdüsen 8 durch eine einzige koaxial zum Laserstrahl 2 angeordnete Ringdüse ersetzt.

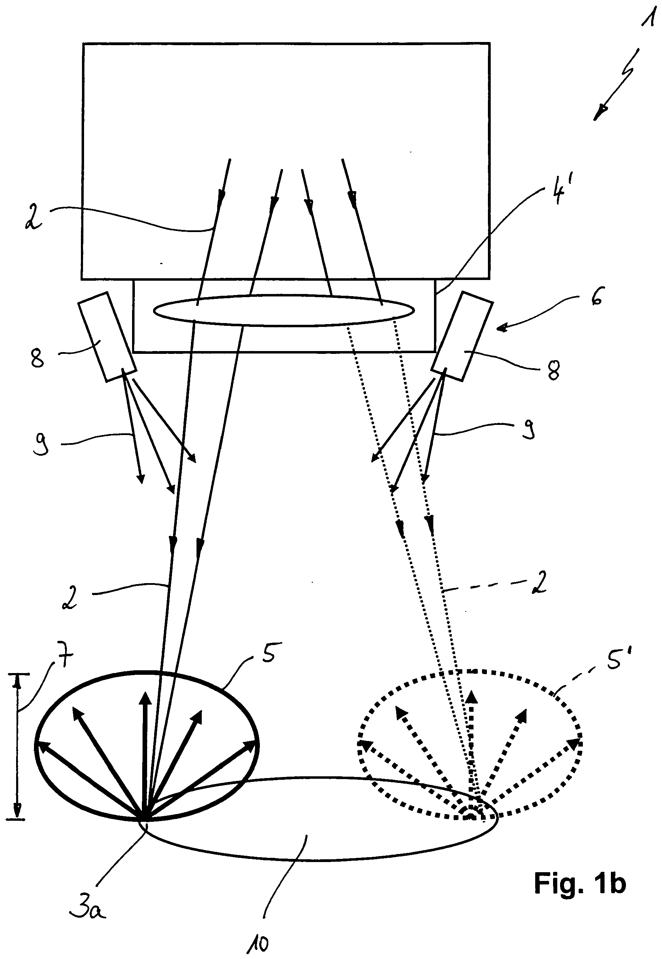

Von der Laserschweißvorrichtung der Fig. 1a unterscheidet sich die in **Fig. 1b** gezeigte Laserschweißvorrichtung 1 allein dadurch, dass die Gasdüsen 8 der Begrenzungseinrichtung 6 an einer Scanneroptik **4'** vorgesehen sind. Diese dient zum seitlichen Ablenken des einfallenden Laserstrahls 2, um die Bearbeitungszone 3a innerhalb einer Bearbeitungsfläche **10** auf dem Werkstück 3 beliebig wählen zu können.

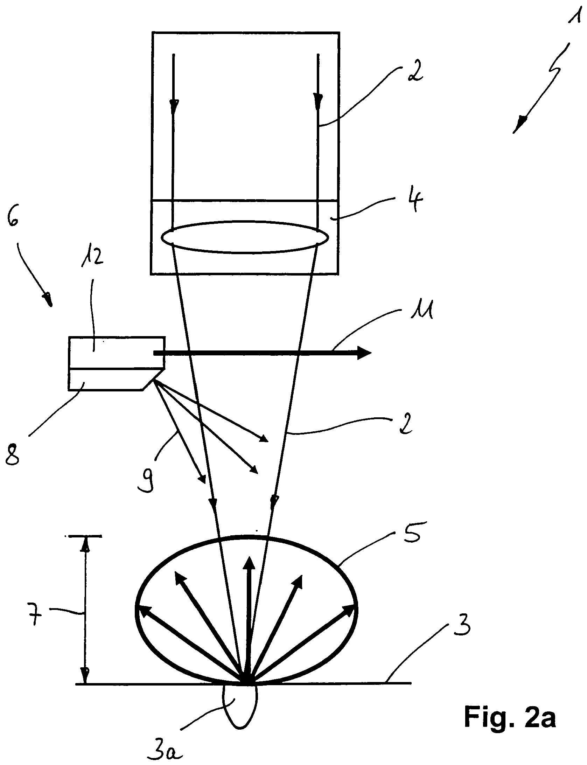

Bei der in **Fig. 2a** gezeigten Laserschweißvorrichtung 1 weist die Begrenzungseinrichtung 6 eine einzige Gasdüse 8 auf, die zwischen der Bearbeitungszone 3a und einem quer zum einfallenden Laserstrahl 2 gerichteten, optiknahen Cross-Jet-Luftstrom **11** angeordnet ist. Der Cross-Jet-Luftstrom 11 schützt die Fokussieroptik 4 vor auftreffenden Spritzern und wird von einer schlitzförmigen Cross-Jet-Düse **12** mit einem Druck von mehreren bar erzeugt. Im gezeigten Ausführungsbeispiel ist die Gasdüse 8 als Zusatzdüse (Schlitz- oder Runddüse) in die Cross-Jet-Düse 12 integriert. Als Variante ist unterhalb der Cross-Jet-Düse 12 auch eine separate Gasdüse geeignet.

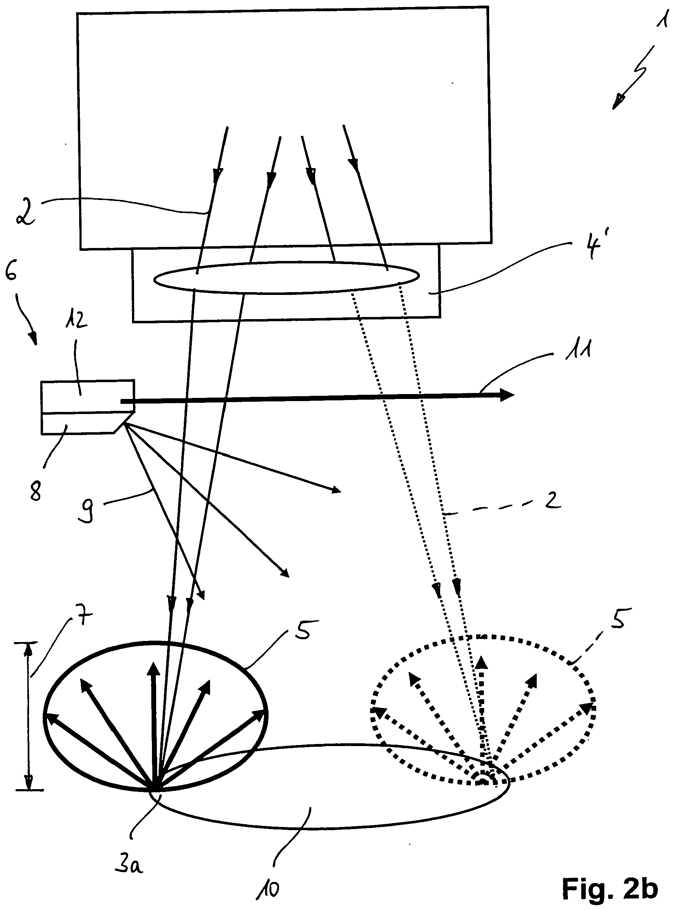

Von der Laserschweißvorrichtung der Fig. 2a unterscheidet sich die in **Fig. 2b** gezeigte Laserschweißvorrichtung 1 allein dadurch, dass statt der Fokussieroptik 4 eine Scanneroptik 4' vorgesehen ist.

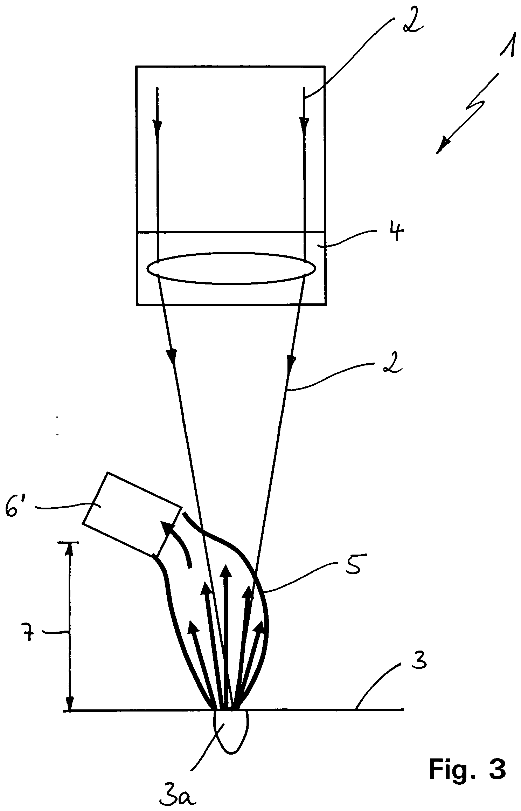

Bei der in **Fig. 3** gezeigten Laserschweißvorrichtung 1 erzeugt eine seitlich neben dem einfallenden Laserstrahl 2 angeordnete Begrenzungseinrichtung **6'** einen Unterdruck zum Absaugen des beim Laserschweißen entstehenden Gemisches 5. Die Begrenzungseinrichtung 6' ist außerhalb des werkstücknahen Bereiches 7 angeordnet, so dass das Gemisch 5 innerhalb des fokussierten Laserstrahls 2 auf den werkstücknahen Bereich 7 begrenzt ist.

Wie Schweißversuche gezeigt haben, werden mit den Begrenzungseinrichtungen 6, 6' tiefere und gleichmäßigere Einschweißungen im Vergleich zu konventionellen Laserschweißvorrichtungen erreicht.

## Patentansprüche

1. Vorrichtung (1) zum Laserschweißen ohne Prozessgas,
mit einer den Laserstrahl (2) der Laserschweißvorrichtung (1) auf die Bearbeitungszone (3a) eines Werkstücks (3) fokussierenden Optik (4; 4'), deren Brennweite (f) mindestens 200mm beträgt, und
mit mindestens einer Gasdüse (8), die in einem Abstand von mindestens 100mm, vorzugsweise mindestens 150mm, vor der Bearbeitungszone (3a) angeordnet ist und einen Gasstrom (9) erzeugt, der den Laserstrahl (2) durchdringt,
wobei der Gasstrom (9) der mindestens einen Gasdüse (8) in Richtung des fokussierten Laserstrahls (2) von oben auf das Werkstück (3) derart auf die Bearbeitungszone (3a) und/oder auf einen Bereich vor der Bearbeitungszone (3a) gerichtet ist, dass das beim Laserschweißen entstehende Gemisch (5) aus Schweißgasen und warmer Umgebungsluft innerhalb des fokussierten Laserstrahls (2) auf einen werkstücknahen Bereich (7), welcher sich von der Bearbeitungszone (3a) höchstens bis zur Gasdüse (8) und maximal bis 150mm vor die Bearbeitungszone (3a) erstreckt, begrenzt ist.

2. Laserschweißvorrichtung nach Anspruch 1, **dadurch gekennzeichnet, dass** der Gasstrom (9) der mindestens einen Gasdüse (8) eine so geringe Strömungsgeschwindigkeit aufweist, dass die Bearbeitungszone (3a) durch den Gasstrom nicht beeinflusst wird.

3. Laserschweißvorrichtung nach Anspruch 1 oder 2, **dadurch gekennzeichnet, dass** der Gasstrom (9) der mindestens einen Gasdüse (8) in Strahlrichtung des Laserstrahls (2) schräg auf die Bearbeitungszone (3a) und/oder schräg auf einen Bereich vor der Bearbeitungszone (3a) gerichtet ist.

4. Laserschweißvorrichtung nach einem der vorhergehenden Ansprüche, **dadurch gekennzeichnet, dass** der Gasstrom (9) der mindestens einen Gasdüse (8) auf den fokussierten Laserstrahl (2) divergent gerichtet ist.

5. Laserschweißvorrichtung nach einem der vorhergehenden Ansprüche, **dadurch gekennzeichnet, dass** eine oder mehrere Gasdüsen (8) vorgesehen sind, die um den Laserstrahl (2) herum mehrere den Laserstrahl (2) durchdringende Gasströme (9) erzeugen.

6. Laserschweißvorrichtung nach einem der vorhergehenden Ansprüche, **dadurch gekennzeichnet, dass** die mindestens eine Gasdüse (8) einen koaxial zum Laserstrahl (2) angeordneten, ringförmigen Gasstrom (9) erzeugt, der den Laserstrahl durchdringt.

7. Vorrichtung (1) zum Laserschweißen ohne Prozessgas,
mit einer den Laserstrahl (2) der Laserschweißvorrichtung (1) auf die Bearbeitungszone (3a) eines Werkstücks (3) fokussierenden Optik (4; 4'), deren Brennweite (f) mindestens 200mm beträgt, und
mit einer eine Absaugeinrichtung (6'),
wobei die Absaugeinrichtung (6') in einem Abstand von mindestens 100mm, vorzugsweise mindestens 150mm, vor der Bearbeitungszone (3a) angeordnet ist und das aus einem werkstücknahen Bereich (7), welcher sich von der Bearbeitungszone (3a) höchstens bis zur Absaugeinrichtung (6') und maximal bis 150mm vor die Bearbeitungszone (3a) erstreckt, heraus in Richtung auf die fokussierende Optik (4; 4') austretende, beim Laserschweißen entstehende Gemisch (5) aus Schweißgasen und warmer Umgebungsluft innerhalb des fokussierten Laserstrahls (2) absaugt.

8. Laserschweißvorrichtung nach einem der vorhergehenden Ansprüche, **dadurch gekennzeichnet, dass** die mindestens eine Gasdüse (8) bzw. die Absaugeinrichtung (6') an der Optik (4; 4') befestigt ist.

9. Laserschweißvorrichtung nach einem Ansprüche 1 bis 7, **dadurch gekennzeichnet, dass** die mindestens eine Gasdüse (8) bzw. die Absaugeinrichtung (6') zwischen der Bearbeitungszone (3a) und einem die Optik (4; 4') schützenden Cross-Jet (11) angeordnet ist.

10. Laserschweißvorrichtung nach Anspruch 9, **dadurch gekennzeichnet, dass** die mindestens eine Gasdüse (8) bzw. die Absaugeinrichtung (6') an einer Cross-Jet-Düse (12) angeordnet ist.

11. Laserschweißvorrichtung nach Anspruch 10, **dadurch gekennzeichnet, dass** die mindestens eine Gasdüse (8) bzw. die Absaugeinrichtung (6') in eine Cross-Jet-Düse integriert ist.

12. Laserschweißvorrichtung nach einem der vorhergehenden Ansprüche,
**dadurch gekennzeichnet, dass** zwischen Bearbeitungszone (3a) und der mindestens einen Gasdüse (8) bzw. der Absaugeinrichtung (6') ein die Bearbeitungszone (3a) vor Oxidation schützendes Schutzgas vorgesehen ist.

## Claims

1. Device (1) for laser welding without process gas, comprising an optics (4; 4') having a focal length (f) of at least 200mm, for focusing the laser beam (2) of the laser welding device (1) onto the processing zone (3a) of a workpiece (3), and
at least one gas nozzle (8) which is arranged at a distance of at least 100mm, preferably at least 150mm, in front of the processing zone (3a) and generates a gas flow (9) which penetrates through the laser beam (2),
wherein the gas flow (9) of the at least one gas nozzle (8) is directed in the direction of the focussed laser beam (2) from above onto the workpiece (3) in such a manner onto the processing zone (3a) and/or onto an area in front of the processing zone (3a) that the mixture (5) of welding gases and hot surrounding air generated during laser welding is delimited within the focussed laser beam (2) to an area (7) close to the workpiece which extends from the processing zone (3a) maximally to the gas nozzle (8) and to maximally 150mm in front of the processing zone (3a).

2. Laser welding device according to claim 1, **characterized in that** the gas flow (9) of the at least one gas nozzle (8) has a flow velocity which is sufficiently slow to prevent any influence of the gas flow on the processing zone (3a).

3. Laser welding device according to claim 1 or 2, **characterized in that** the gas flow (9) of the at least one gas nozzle (8) in the beam direction of the laser beam (2) is directed at an inclination onto the processing zone (3a) and/or at an inclination onto an area in front of the processing zone (3a).

4. Laser welding device according to any one of the preceding claims, **characterized in that** the gas flow (9) of the at least one gas nozzle (8) is directed onto the focused laser beam (2) in a divergent manner.

5. Laser welding device according to any one of the preceding claims, **characterized in that** one or more gas nozzles (8) are provided which generate several gas flows (9) around the laser beam (2), which penetrate through the laser beam (2).

6. Laser welding device according to any one of the preceding claims, **characterized in that** the at least one gas nozzle (8) generates an annular gas flow (9) which is disposed coaxially to the laser beam (2) and penetrates through the laser beam.

7. Device (1) for laser welding without process gas, comprising an optics (4; 4') having a focal length (f) of at least 200mm, for focusing the laser beam (2) of the laser welding device (1) onto the processing zone (3a) of a workpiece (3), and
a suction device (6'),
wherein the suction device (6') is arranged at a distance of at least 100mm, preferably at least 150mm, in front of the processing zone (3a) and sucks off the mixture (5) of welding gases and hot surrounding air within the focussed laser beam (2), which mixture is generated during laser welding and escapes in the direction towards the focusing optics (4; 4'), from an area (7) close to the workpiece which extends from the processing zone (3a) maximally to the suction device (6') and maximally to 150mm in front of the processing zone (3a).

8. Laser welding device according to any one of the preceding claims, **characterized in that** the at least one gas nozzle (8) or the suction device (6') is mounted to the optics (4; 4').

9. Laser welding device according to any one of the claims 1 through 7, **characterized in that** the at least one gas nozzle (8) or the suction device (6') is disposed between the processing zone (3a) and a cross-jet (11) protecting the optics (4; 4').

10. Laser welding device according to claim 9, **characterized in that** the at least one gas nozzle (8) or suction device (6') is disposed on a cross-jet nozzle (12).

11. Laser welding device according to claim 10, **characterized in that** the at least one gas nozzle (8) or the suction device (6') is integrated in a cross-jet nozzle.

12. Laser welding device according to any one of the preceding claims, **characterized in that** a protection gas, which protects the processing zone (3a) from oxidation, is provided between the processing zone (3a) and the at least one gas nozzle (8) or the suction device (6').

## Revendications

1. Dispositif (1) pour le soudage au laser sans gaz de processus,
avec une optique (4 ; 4') focalisant le faisceau laser (2) du dispositif de soudage au laser (1) sur la zone d'usinage (3a) d'une pièce (3), dont la distance focale (f) est d'au moins 200 mm, et
avec au moins une buse de gaz (8) qui est disposée à une distance d'au moins 100 mm, de préférence d'au moins 150 mm, avant la zone d'usinage (3a) et qui produit un flux de gaz (9) qui traverse le faisceau laser (2),
le flux de gaz (9) de ladite au moins une buse de gaz (8), par le haut sur la pièce (3) dans la direction du faisceau laser focalisé (2), étant dirigé sur la zone d'usinage (3a) et/ou sur un secteur situé avant la zone d'usinage (3a) de telle façon que le mélange (5) de gaz de soudage et d'air ambiant chaud formé lors du soudage au laser soit limité, à l'intérieur du faisceau laser focalisé (2), à un secteur (7) proche de la pièce, qui s'étend de la zone d'usinage (3a) tout au plus jusqu'à la buse de gaz (8) et au maximum jusqu'à 150 mm avant la zone d'usinage (3a).

2. Dispositif de soudage au laser selon la revendication 1, **caractérisé en ce que** le flux de gaz (9) de ladite au moins une buse de gaz (8) présente une vitesse d'écoulement assez faible pour que la zone d'usinage (3a) ne soit pas influencée par le flux de gaz.

3. Dispositif de soudage au laser selon la revendication 1 ou la revendication 2, **caractérisé en ce que** le flux de gaz (9) de ladite au moins une buse de gaz (8) dans la direction du faisceau laser (2) est dirigé obliquement sur la zone d'usinage (3a) et/ou obliquement sur un secteur situé avant la zone d'usinage (3a).

4. Dispositif de soudage au laser selon l'une des revendications précédentes, **caractérisé en ce que** le flux de gaz (9) de ladite au moins une buse de gaz (8) est dirigé de manière divergente sur le faisceau laser focalisé (2).

5. Dispositif de soudage au laser selon l'une des revendications précédentes, **caractérisé en ce qu'**une ou plusieurs buses de gaz (8) sont prévues, qui produisent autour du faisceau laser (2) plusieurs flux de gaz (9) qui traversent le faisceau laser (2).

6. Dispositif de soudage au laser selon l'une des revendications précédentes, **caractérisé en ce que** ladite au moins une buse de gaz (8) produit un flux de gaz (9) annulaire, disposé coaxialement au faisceau laser (2), qui traverse le faisceau laser.

7. Dispositif (1) pour le soudage au laser sans gaz de processus,
avec une optique (4 ; 4') focalisant le faisceau laser (2) du dispositif de soudage au laser (1) sur la zone d'usinage (3a) d'une pièce (3), dont la distance focale (f) est d'au moins 200 mm, et
avec un dispositif d'aspiration (6'),
le dispositif d'aspiration (6') étant disposé à une distance d'au moins 100 mm, de préférence d'au moins 150 mm, avant la zone d'usinage (3a) et aspirant, à l'intérieur du faisceau laser focalisé (2), le mélange (5) de gaz de soudage et d'air ambiant chaud formé lors du soudage au laser, se dégageant en direction de l'optique focalisante (4 ; 4'), d'un secteur (7) proche de la pièce qui s'étend de la zone d'usinage (3a) tout au plus jusqu'au dispositif d'aspiration (6') et au maximum jusqu'à 150 mm avant la zone d'usinage (3a).

8. Dispositif de soudage au laser selon l'une des revendications précédentes, **caractérisé en ce que** ladite au moins une buse de gaz (8), respectivement le dispositif d'aspiration (6'), est fixé(e) à l'optique (4 ; 4').

9. Dispositif de soudage au laser selon l'une des revendications 1 à 7, **caractérisé en ce que** ladite au moins une buse de gaz (8), respectivement le dispositif d'aspiration (6'), est disposé(e) entre la zone d'usinage (3a) et un jet croisé (11) protégeant l'optique (4 ; 4').

10. Dispositif de soudage au laser selon la revendication 9, **caractérisé en ce que** ladite au moins une buse de gaz (8), respectivement le dispositif d'aspiration (6'), est disposé(e) sur une buse à jet croisé (12).

11. Dispositif de soudage au laser selon la revendication 10, **caractérisé en ce que** ladite au moins une buse de gaz (8), respectivement le dispositif d'aspiration (6'), est intégré(e) dans une buse à jet croisé.

12. Dispositif de soudage au laser selon l'une des revendications précédentes, **caractérisé en ce qu'**un gaz de protection protégeant la zone d'usinage (3a) contre l'oxydation est prévu entre la zone d'usinage (3a) et ladite au moins une buse de gaz (8), respectivement le dispositif d'aspiration (6')..
